# EUROPÄISCHE PATENTSCHRIFT

(11) **EP 2 347 843 B1**
(45) Veröffentlichungstag und Bekanntmachung des Hinweises auf die Patenterteilung: **28.12.2011**
(21) Anmeldenummer: 10192518.8
(22) Anmeldetag: 25.11.2010
(51) Int. Cl.: B23B 49/00, B25F 5/00, B25F 5/02

(54) **Arretiervorrichtung zur Arretierung eines Tiefenanschlagstabs, Zusatzhandgriff und handgeführte Werkzeugmaschine**
Lock device for locking a depth stop rod, additional handle and handheld machine tool
Dispositif d'arrêt pour l'arrêt d'une tige de butée en profondeur, poignée supplémentaire et machine-outil entraînée manuellement

(30) Priorität: 23.01.2010 DE 102010005535
(43) Veröffentlichungstag der Anmeldung: 27.07.2011
(73) Patentinhaber: Metabowerke GmbH, 72622 Nürtingen (DE)
(72) Erfinder: Kukla, Michael, 72669, Unterensingen (DE); Blind, Jan-Simon, 70771, Leinfelden-Echterdingen (DE)
(74) Vertreter: Raunecker, Klaus Peter

(56) Entgegenhaltungen:
- WO-A1-88/00870
- DE-U1- 7 613 952
- JP-A- 2 076 611
- JP-A- 2 076 612
- US-A- 4 256 422

## Beschreibung

Die Erfindung betrifft eine Arretiervorrichtung zur Arretierung eines Tiefenanschlagstabs, mit einem Arretiergehäuse, welches einen Verbindungsabschnitt zur Verbindung mit einem Handgriff oder einem Gehäuse einer handgeführten Werkzeugmaschine aufweist oder welches durch einen Handgriff oder ein Gehäuse einer handgeführten Werkzeugmaschine gebildet ist, wobei das Arretiergehäuse einen Aufnahmebereich zur längsverschieblichen Aufnahme des Tiefenanschlagstabs aufweist, wobei der Tiefenanschlagstab mittels eines handbetätigbaren Arretierelements an oder in dem Aufnahmebereich arretierbar oder arretiert ist, wobei das Arretierelement in Form eines Schwenkhebels ausgebildet ist, welcher in einer ersten Schwenkstellung eine handbetätigungskraftfreie Freigabe des Tiefenanschlagstabs und in einer zweiten Schwenkstellung eine Arretierung des Tiefenanschlagstabs bewirkt.

Aus der DE 10 2008 004 875 A1 ist ein Handgriff für ein Elektrohandwerkzeug bekannt, welcher eine Arretiervorrichtung für einen Tiefenanschlagstab umfasst. Bei dieser Arretiervorrichtung ist das Arretierelement entlang einer Verschiebeachse verschiebbar und mittels einer Feder in einer Lage gehalten, in welcher ein in dem Aufnahmebereich der Arretiervorrichtung angeordneter Tiefenanschlagstab arretiert ist. Für eine Längsverstellung des Tiefenanschlagstabs ist es erforderlich, eine Druckkraft auf das Arretierelement auszuüben, welche der Federkraft entgegengesetzt ist. Dies hat den Nachteil, dass für eine genaue Einstellung der Längslage des Tiefenanschlagstabs zwei Hände erforderlich sind, um gleichzeitig das Arretierelement zu betätigen und den Tiefenanschlagstab verschieben zu können.

Aus der EP 1 336 446 A1 ist ein verstellbarer Tiefenanschlag für ein handgetragenes Arbeitsgerät bekannt, bei welchem das Arretierelement in Form eines Schwenkhebels ausgebildet ist. Auch dieses Arretierelement ist mittels einer Feder kraftbeaufschlagt, so dass das Arretierelement in einem unbetätigten Zustand eine Arretierung des Tiefenanschlagstabs bewirkt.

Aus der US 4,256,422 ist eine Bohrmaschine mit einer Arretiervorrichtung für einen Tiefenanschlagstab gemäß dem Oberbegriff des Anspruchs 1 bekannt, welche ein als Schwenkhebel ausgebildetes Arretierelement umfasst. Dieses Arretierelement ist im Unterschied zum vorstehend genannten Stand der Technik nicht mit einer Federkraft beaufschlagt, sondern zwischen zwei vorgegebenen Schwenkstellungen verschwenkbar. In einer ersten Schwenkstellung, in der der Tiefenanschlag freigegeben ist, ist keine Handkraft erforderlich. In einer zweiten Schwenkstellung, in welcher der Tiefenanschlagstab arretiert ist, wird ein Abschnitt des Tiefenanschlagstabs oder ein Zwischenelement gegen den Tiefenanschlagstab gedrückt. Hierdurch werden der Schwenkhebel und der Tiefenanschlagstab oder der Schwenkhebel, das Zwischenelement und der Tiefenanschlagstab miteinander verklemmt.

Bei der aus der US 4,256,422 bekannten Arretiervorrichtung ist es vorteilhaft, dass eine genaue Verstellung des Tiefenanschlagstabs erfolgen kann, ohne dass eine Handkraft auf das Arretierelement ausgeübt werden muss. Nachteilig bei der aus der US 4,256,422 bekannten Arretiervorrichtung ist jedoch, dass diese einem erhöhten Verschleiß unterliegt. Dies ist bedingt durch die Reibung zwischen der Klemmfläche des Schwenkhebels und des Tiefenanschlagstabs beziehungsweise des Zwischenelements.

Hiervon ausgehend liegt der Erfindung die Aufgabe zugrunde, eine möglichst einfach bedienbare und robuste Arretiervorrichtung zu schaffen.

Diese Aufgabe wird bei einer Arretiervorrichtung der eingangs genannten Art erfindungsgemäß dadurch gelöst, dass der Schwenkhebel einen ersten Rastabschnitt aufweist, dass das Arretiergehäuse einen zweiten Rastabschnitt aufweist und dass der erste Rastabschnitt in der zweiten Schwenkstellung des Schwenkhebels lösbar mit dem zweiten Rastabschnitt des Arretiergehäuses verrastbar oder verrastet ist.

Erfindungsgemäß ist vorgesehen, dass der Schwenkhebel durch eine Verrastung mit dem Arretiergehäuse in der zweiten Schwenkstellung gehalten ist. Der Schwenkhebel ist also nicht, wie bei der US 4,256,422, durch einen klemmenden Eingriff mit dem Tiefenanschlagstab oder mit einem Zwischenelement in der zweiten Schwenkstellung gehalten, sondern mittels eines ersten Rastabschnitts, welcher mit einem zweiten Rastabschnitt zusammenwirkt, der an dem Arretiergehäuse angeordnet ist. Dies hat den Vorteil, dass die Rastabschnitte unabhängig von einem Arretierabschnitt des Schwenkhebels ausgestaltet und angeordnet werden können. Hierdurch entsteht eine hohe konstruktive Freiheit sowohl hinsichtlich der Ausgestaltung eines Arretierabschnitts als auch hinsichtlich der Ausgestaltung der Rastabschnitte. Diese konstruktive Trennung ermöglicht es, die Arretiervorrichtung sehr robust und gleichzeitig leicht bedienbar auszuführen.

Bei einer bevorzugten Ausführungsform ist vorgesehen, dass der Schwenkhebel um eine Schwenkachse schwenkbar ist und dass der Aufnahmebereich zwischen der Schwenkachse und dem zweiten Rastabschnitt angeordnet ist. Dies ermöglicht es, den Schwenkhebel so auszulegen, dass er ausgehend von der Schwenkachse in Richtung auf den zweiten Rastabschnitt den Aufnahmebereich abschnittsweise umschließt. Hierdurch kann ein vergleichsweise langer Schwenkhebelabschnitt bereitgestellt werden, welcher einfacher und vor allen Dingen weniger verschleißanfällig verformbar ist als ein vergleichsweise kurzer Materialabschnitt, der bei der US 4,256,422 zwischen der Schwenkachse und dem Tiefenanschlagstab oder dem Zwischenelement angeordnet ist.

Besonders bevorzugt ist es, wenn der erste Rastabschnitt in Form einer Rastausnehmung und der zweite Rastabschnitt in Form eines Rastvorsprungs ausgebildet ist. Hierdurch kann eine stabile Rastvorrichtung geschaffen werden. Wenn der zweite Rastabschnitt und der Aufnahmebereich relativ zueinander zentriert angeordnet sind, kann eine besonders raumsparende Anordnung geschaffen werden.

Für eine zuverlässige Verrastung der Rastabschnitte ist es bevorzugt, wenn sich der erste Rastabschnitt und der zweite Rastabschnitt jeweils über einen Winkel von größer als 90° erstrecken.

Insbesondere ist es bevorzugt, wenn der erste Rastabschnitt mit dem Schwenkhebel einstückig ausgebildet ist, so dass eine robuste und preiswerte Anordnung geschaffen werden kann.

Bei einer besonders bevorzugten Ausführungsform ist vorgesehen, dass der Schwenkhebel einen federelastischen Griffabschnitt aufweist, welcher in der ersten Schwenkstellung des Schwenkhebels an dem Arretiergehäuse anliegt, und dass der Schwenkhebel nur durch Verformung des Griffabschnitts aus der ersten Schwenkstellung in die zweite Schwenkstellung überführbar ist. Hierdurch ist gewährleistet, dass der Schwenkhebel nicht unabsichtlich aus der handbetätigungskraftfreien ersten Schwenklage in die zweite Schwenklage überführt wird. Die Anlage des Griffabschnitts an dem Arretiergehäuse in der ersten Schwenklage kann in der Gebrauchslage der Arretiervorrichtung insbesondere schwerkraftunterstützt erfolgen.

Vorzugsweise ist der Griffabschnitt mit dem Schwenkhebel einstückig ausgebildet, wodurch die Teilezahl reduziert werden kann.

Ferner ist es bevorzugt, wenn der Griffabschnitt und der erste Rastabschnitt ineinander übergehen, so dass eine Verformung des Griffabschnitts mit einer Aufweitung des ersten Rastabschnitts einhergeht, um eine Überführung des Schwenkhebels aus der ersten Schwenkstellung in die zweite Schwenkstellung oder umgekehrt zu ermöglichen.

Ferner ist es bevorzugt, wenn der Schwenkhebel einen Langerabschnitt zur Schwenklagerung an dem Arretiergehäuse aufweist, wodurch eine besonders einfache Konstruktion geschaffen werden kann. Diese kann weiter vereinfacht werden, wenn der Lagerabschnitt mit dem Schwenkhebel einstückig ausgebildet ist.

Bevorzugt ist es ferner, wenn der Schwenkhebel einen Arretierabschnitt aufweist, welcher in der zweiten Schwenkstellung des Schwenkhebels formschlüssig oder reibschlüssig an dem Tiefenanschlagstab anliegt. Dieser Arretierabschnitt kann in an sich bekannter Weise eine Riffelfläche aufweisen, welche mit einer Gegenriffelfläche des Tiefenanschlagstabs zusammenwirkt.

Auch bei dem Arretierabschnitt ist es bevorzugt, wenn dieser mit dem Schwenkhebel einstückig ausgebildet ist, so dass eine Arretiervorrichtung mit einem besonders einfachen Aufbau geschaffen werden kann.

Der Schwenkhebel ist vorzugsweise aus einem Kunststoffmaterial hergestellt, beispielsweise aus Polyamid. Das Kunststoffmaterial ermöglicht eine einfache und preisgünstige Integration eines federelastischen Griffabschnitts, eines ersten Rastvorsprungs, eines Arretierabschnitts und eines Lagerabschnitts.

Die Erfindung betrifft ferner einen Zusatzhandgriff zur lösbaren Befestigung an einem Gehäuse einer handgeführten Werkzeugmaschine, welcher eine vorstehend beschriebene Arretiervorrichtung umfasst.

Ferner betrifft die Erfindung eine handgeführte Werkzeugmaschine, insbesondere eine Bohrmaschine, welche eine vorstehend beschriebene Arretiervorrichtung oder einen vorstehend beschriebenen Zusatzhandgriff umfasst.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine perspektivische Ansicht einer Ausführungsform einer an einem Zusatzhandgriff einer handgeführten Werkzeugmaschine angeordneten Arretiervorrichtung, mit einem Schwenkhebel in einer ersten Schwenkstellung;
- Figur 2: eine der Figur 1 entsprechende Ansicht, mit dem Schwenkhebel in einer zweiten Schwenkstellung;
- Figur 3: eine perspektivische Ansicht des Schwenkhebels;
- Figur 4: eine weitere perspektivische Ansicht des Schwenkhebels;
- Figur 5: einen Seitenansicht des Zusatzhandgriffs gemäß Figur 1 in einem Längsschnitt; und
- Figur 6: einen in Figur 5 mit VI bezeichneten Ausschnitt in vergrößerter Darstellung.

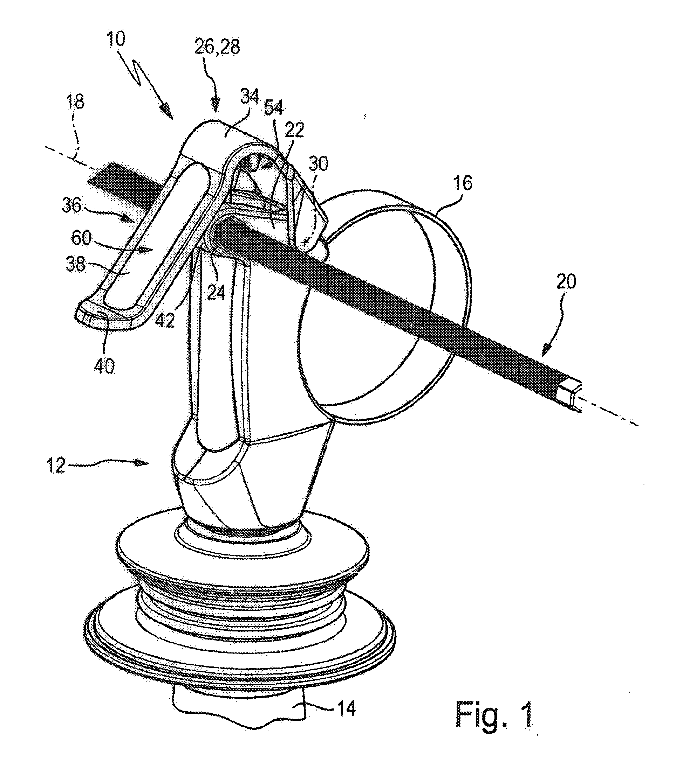

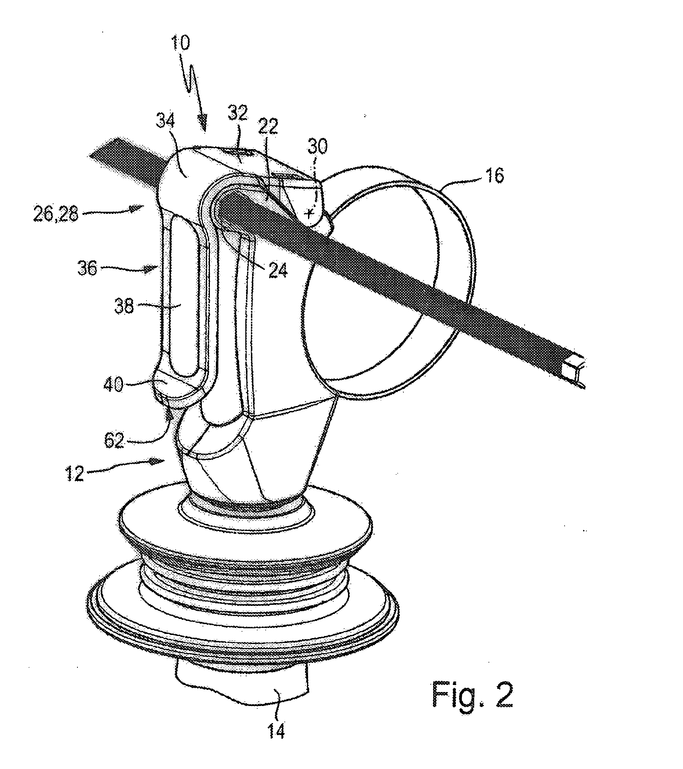

In den Figuren 1 und 2 ist eine Ausführungsform einer Arretiervorrichtung insgesamt mit dem Bezugszeichen 10 bezeichnet. Die Arretiervorrichtung 10 ist an einem Handgriff 12 angeordnet, welcher eine Grifffläche 14 umfasst. Der Handgriff 12 weist ferner einen Befestigungsabschnitt 16 auf, mit welchem der Handgriff 12 an einer (nicht dargestellten) handgeführten Werkzeugmaschine, insbesondere einer Bohrmaschine, befestigbar ist.

Die Arretiervorrichtung 10 dient zur Arretierung eines längs einer Achse 18 verschiebbaren Tiefenanschlagstabs 20.

Die Arretiervorrichtung umfasst ein Arretiergehäuse 22 mit einem Aufnahmebereich 24 zur Aufnahme des Tiefenanschlagstabs 20. Der Aufnahmebereich 24 ist durch eine umfangseitig geschlossene Aussparung in dem Arretiergehäuse 22 gebildet.

Die Arretiervorrichtung 10 umfasst ein Arretierelement 26, welches in Form eines Schwenkhebels 28 ausgebildet ist.

Der Schwenkhebel 28 ist um eine Schwenkachse 30 verschwenkbar, und zwar zwischen einer in Figur 1 dargestellten ersten Schwenkstellung und einer in Figur 2 dargestellten zweiten Schwenkstellung. Der Schwenkweg zwischen den Schwenkstellungen beträgt beispielsweise zwischen ungefähr 20 Grad und ungefähr 70 Grad.

Der Schwenkhebel 28 umfasst ausgehend von der Schwenkachse 30 einen ersten Schwenkhebelabschnitt 32, welcher an einem ersten Rastabschnitt 34 mündet. Der erste Rastabschnitt 34 ist in Form einer Rastausnehmung gebildet. Der erste Rastabschnitt 34 geht auf der dem ersten Schwenkhebelabschnitt 32 gegenüberliegenden Seite in einen zweiten Schwenkhebelabschnitt 36 über, welcher in Form eines federelastischen Griffabschnitts 38 ausgebildet ist. Der Griffabschnitt 38 weist an seinem freien Ende eine nach außen abgewinkelte Grifffläche 40 auf.

Das Arretiergehäuse 22 weist einen zweiten Rastabschnitt 42 auf, welcher in Form eines Rastvorsprungs ausgebildet ist. Der Rastvorsprung 42 und der Aufnahmebereich 24 sind relativ zueinander zentriert angeordnet.

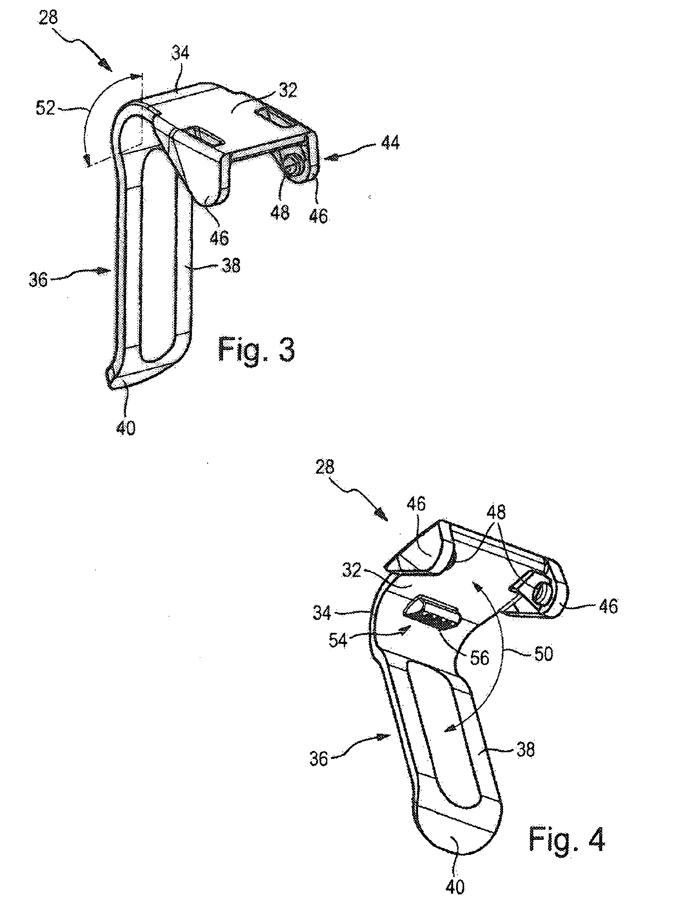

Der Schwenkhebel 28 ist in den Figuren 3 und 4 in verschiedenen Perspektiven dargestellt. Der Schwenkhebel 28 umfasst einen mit dem ersten Schwenkhebelabschnitt 32 integral ausgebildeten Lagerabschnitt 44 mit Laschen 46, an denen Lagerbolzen 48 angeordnet sind. Die Lagerbolzen 48 wirken mit in dem Arretiergehäuse 22 vorgesehenen Lagerbolzenaufnahmen (aus Übersichtsgründen nicht dargestellt) zusammen.

Der erste Schwenkhebelabschnitt 32 und der zweite Schwenkhebelabschnitt 36 sind zueinander winklig angeordnet, und zwar mit einem Winkel 50 von kleiner als 90°, insbesondere mit einem Winkel von ungefähr 60 Grad bis ungefähr 80 Grad.

Der erste Schwenkhebelabschnitt 32, der erste Rastabschnitt 34 und der zweite Schwenkhebelabschnitt 36 gehen kontinuierlich ineinander über. Dementsprechend erstreckt sich der erste Rastabschnitt 34 über einen Winkel 52 von größer als 90°, vorzugsweise über einen Winkel 52 von zwischen ungefähr 100 Grad und ungefähr 120 Grad. Auch der zweite Rastabschnitt 42 des Arretiergehäuses 22 erstreckt sich über einen dem Winkel 52 entsprechenden Winkel.

Der Schwenkhebel 28 weist auf seiner dem Arretiergehäuse 22 zugewandten Innenseite einen Arretierabschnitt 54 auf. Der Arretierabschnitt 54 ist im Bereich des Übergangs zwischen dem ersten Schwenkhebelabschnitt 32 und dem ersten Rastabschnitt 34 angeordnet. Der Arretierabschnitt 54 weist eine relativ zu dem ersten Schwenkhebelabschnitt 32 geneigte Arretierfläche 56 auf, welche insbesondere geriffelt ist.

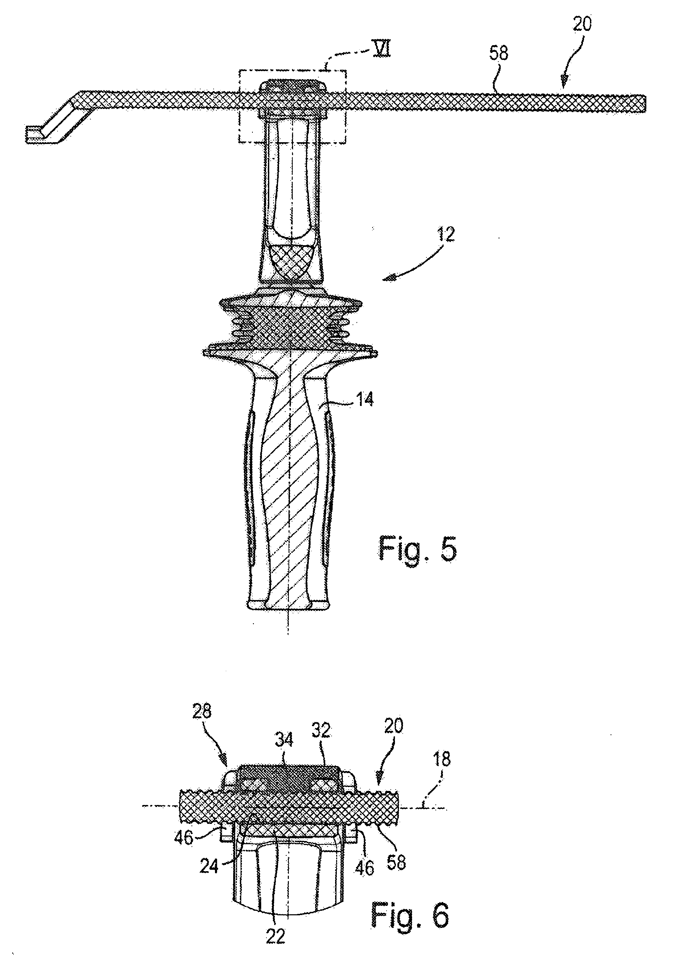

Der Tiefenanschlagstab 20 weist vorzugsweise eine geriffelte Außenfläche 58 auf. In der zweiten Schwenkstellung des Schwenkhebels wirkt die Arretierfläche 56 bezogen auf die Achse 18 formschlüssig mit der Außenfläche 58 zusammen (vgl. Figuren 5 und 6).

Besonders bevorzugt ist es, wenn der erste Schwenkhebelabschnitt 32, der erste Rastabschnitt 34 und der zweite Schwenkhebelabschnitt 36 eine zumindest annähernd identische Materialstärke aufweisen, beispielsweise zwischen ungefähr einem Millimeter und ungefähr drei Millimetern.

Die vorstehend beschriebene Arretiervorrichtung 10 funktioniert wie folgt:
In der in Figur 1 dargestellten ersten Schwenkstellung des Schwenkhebels 28 ist der Tiefenanschlagstab 20 längs der Achse 18 in den Aufnahmebereich 24 einführbar, ohne dass hierfür eine Handkraft auf den Griffabschnitt 38 des Schwenkhebels 28 ausgeübt werden muss. Der Griffabschnitt 38 liegt lose auf dem Arretiergehäuse 22, insbesondere auf dem zweiten Rastabschnitt 42, auf. In dieser ersten Schwenkstellung steht der Arretierabschnitt 54 außer Eingriff mit dem Tiefenanschlagstab 20.

Ausgehend aus der in Figur 1 dargestellten ersten Schwenkstellung bewirkt eine in Figur 1 mit 60 angedeutete Druckkraft auf die Außenseite des Schwenkhebels 28 ein Verschwenken des Schwenkhebels 28 um die Schwenkachse 30. Hierbei gleitet die Innenseite des zweiten Schwenkhebelabschnitts 36 auf dem zweiten Rastabschnitt 42 ab und wird so verformt, dass sich der Winkel 50 zwischen dem ersten Schwenkhebelabschnitt 32 und dem zweiten Schwenkhebelabschnitt 36 vergrößert. Diese Vergrößerung des Winkels 50 geht mit einer Aufweitung des ersten Rastabschnitts 34 einher, so dass der erste Rastabschnitt 34 in Eingriff mit dem zweiten Rastabschnitt 42 gelangt. Durch die Federelastizität des Schwenkhebels 28, insbesondere des Griffabschnitts 38, verkleinert sich der Winkel 50 zwischen dem ersten Schwenkhebelabschnitt 32 und dem zweiten Schwenkhebelabschnitt 36, so dass in der in Figur 2 dargestellten zweiten Schwenkstellung der Schwenkhebel 28 und das Arretiergehäuse 22 formschlüssig miteinander verrastet sind. In dieser zweiten Schwenkstellung stehen der Arretierabschnitt 54 und der Tiefenanschlagstab 20 in einem formschlüssigen Eingriff miteinander.

Um den Schwenkhebel 28 aus der in Figur 2 dargestellten zweiten Schwenkstellung in die in Figur 1 dargestellte erste Schwenkstellung zu überführen, kann die Grifffläche 40 von der Innenseite des Schwenkhebels 28 her hintergriffen und mit Hand mit einer Druckkraft 62 (vgl. Figur 2) beaufschlagt werden. Hierdurch wird der Griffabschnitt 38 federelastisch nach außen verformt, wodurch der erste Rastabschnitt 34 in vorstehend bereits beschriebener Weise aufgeweitet und der Formschluss zwischen dem ersten Rastabschnitt 34 und dem zweiten Rastabschnitt 42 aufgelöst wird. Hierdurch kann der Schwenkhebel 28 zurück in die in Figur 1 dargestellte Erstschwenkstellung verbracht werden, wobei hierdurch auch der Arretierabschnitt 54 außer Eingriff mit dem Tiefenanschlagstab 20 gelangt.

## Patentansprüche

1. Arretiervorrichtung (10) zur Arretierung eines Tiefenanschlagstabs (20), mit einem Arretiergehäuse (22), welches einen Verbindungsabschnitt zur Verbindung mit einem Handgriff (12) oder einem Gehäuse einer handgeführten Werkzeugmaschine aufweist oder welches durch einen Handgriff (12) oder ein Gehäuse einer handgeführten Werkzeugmaschine gebildet ist, wobei das Arretiergehäuse (22) einen Aufnahmebereich (24) zur längsverschieblichen Aufnahme des Tiefenanschlagstabs (20) aufweist, wobei der Tiefenanschlagstab (20) mittels eines handbetätigbaren Arretierelements (26) an oder in dem Aufnahmebereich (24) arretierbar oder arretiert ist, wobei das Arretierelement (26) in Form eines Schwenkhebels (28) ausgebildet ist, welcher in einer ersten Schwenkstellung eine handbetätigungskraftfreie Freigabe des Tiefenanschlagstabs (20) und in einer zweiten Schwenkstellung eine Arretierung des Tiefenanschlagstabs (20) bewirkt, **dadurch gekennzeichnet, dass** der Schwenkhebel einen ersten Rastabschnitt (34) aufweist, dass das Arretiergehäuse (22) einen zweiten Rastabschnitt (42) aufweist und dass der erste Rastabschnitt (34) in der zweiten Schwenkstellung des Schwenkhebels (28) lösbar mit dem zweiten Rastabschnitt (42) des Arretiergehäuses (22) verrastbar oder verrastet ist.

2. Arretiervorrichtung (10) nach Anspruch 1, **dadurch gekennzeichnet, dass** der Schwenkhebel (28) um eine Schwenkachse (30) schwenkbar ist und dass der Aufnahmebereich (24) zwischen der Schwenkachse (30) und dem zweiten Rastabschnitt (42) angeordnet ist.

3. Arretiervorrichtung (10) nach einem der voranstehenden Ansprüche, **dadurch gekennzeichnet, dass** der erste Rastabschnitt (34) in Form einer Rastausnehmung und der zweite Rastabschnitt (42) in Form eines Rastvorsprungs ausgebildet ist.

4. Arretiervorrichtung (10) nach einem der voranstehenden Ansprüche, **dadurch gekennzeichnet, dass** sich der erste Rastabschnitt (34) und der zweite Rastabschnitt (42) jeweils über einen Winkel (52) von größer als 90° erstrecken.

5. Arretiervorrichtung (10) nach einem der voranstehenden Ansprüche, **dadurch gekennzeichnet, dass** der erste Rastabschnitt (34) mit dem Schwenkhebel (28) einstückig ausgebildet ist.

6. Arretiervorrichtung (10) nach einem der voranstehenden Ansprüche, **dadurch gekennzeichnet, dass** der Schwenkhebel (28) einen federelastischen Griffabschnitt (38) aufweist, welcher in der ersten Schwenkstellung des Schwenkhebels (28) an dem Arretiergehäuse (22) anliegt und dass der Schwenkhebel (28) nur durch Verformung des Griffabschnitts (38) aus der ersten Schwenkstellung in die zweite Schwenkstellung überführbar ist.

7. Arretiervorrichtung (10) nach Anspruch 6, **dadurch gekennzeichnet, dass** der Griffabschnitt (38) mit dem Schwenkhebel (28) einstückig ausgebildet ist.

8. Arretiervorrichtung (10) nach Anspruch 6 oder 7, **dadurch gekennzeichnet, dass** der Griffabschnitt (38) und der erste Rastabschnitt (34) ineinander übergehen.

9. Arretiervorrichtung (10) nach einem der voranstehenden Ansprüche, **dadurch gekennzeichnet, dass** der Schwenkhebel (28) einen Lagerabschnitt (44) zur Schwenklagerung an dem Arretiergehäuse aufweist.

10. Arretiervorrichtung (10) nach Anspruch 9, **dadurch gekennzeichnet, dass** der Lagerabschnitt (44) mit dem Schwenkhebel (28) einstückig ausgebildet ist.

11. Arretiervorrichtung (10) nach einem der voranstehenden Ansprüche, **dadurch gekennzeichnet, dass** der Schwenkhebel (28) einen Arretierabschnitt (54) aufweist, welcher in der zweiten Schwenkstellung des Schwenkhebels formschlüssig oder reibschlüssig an dem Tiefenanschlagstab (20) anliegt.

12. Arretiervorrichtung (10) nach Anspruch 11, **dadurch gekennzeichnet, dass** der Arretierabschnitt (54) mit dem Schwenkhebel (28) einstückig ausgebildet ist.

13. Arretiervorrichtung (10) nach einem der voranstehenden Ansprüche, **dadurch gekennzeichnet, dass** der Schwenkhebel (28) aus einem Kunststoffmaterial hergestellt ist.

14. Zusatzhandgriff zur lösbaren Befestigung an einem Gehäuse einer handgeführten Werkzeugmaschine, umfassend eine Arretiervorrichtung (10) nach einem der voranstehenden Ansprüche.

15. Handgeführte Werkzeugmaschine, umfassend eine Arretiervorrichtung (10) nach einem der Ansprüche 1 bis 13 oder einen Zusatzhandgriff nach Anspruch 14.

## Claims

1. Locking device (10) for locking a depth stop rod (20), comprising a locking housing (22), which has a connecting portion for connection to a handle (12) or a housing of a hand-held tool machine or which is formed by a handle (12) or a housing of a hand-held tool machine, wherein the locking housing (22) has a receiving region (24) for receiving the depth stop rod (20) in a longitudinally displaceable manner, wherein the depth stop rod (20) is lockable or locked on or in the receiving region (24) by means of a manually actuable locking element (26), wherein the locking element (26) is configured in the form of a swivel lever (28), which in a first swivel position brings about a manual actuating force-free release of the depth stop rod (20) and in a second swivel position brings about a locking of the depth stop rod (20), **characterized in that** the swivel lever has a first detent portion (34), that the locking housing (22) has a second detent portion (42) and that the first detent portion (34) in the second swivel position of the swivel lever (28) is latchable or latched releasably to the second detent portion (42) of the locking housing (22).

2. Locking device (10) according to claim 1, **characterized in that** the swivel lever (28) is pivotable about a swivelling axis (30) and that the receiving region (24) is disposed between the swivelling axis (30) and the second detent portion (42).

3. Locking device (10) according to one of the preceding claims, **characterized in that** the first detent portion (34) is configured in the form of a detent recess and the second detent portion (42) is configured in the form of a detent projection.

4. Locking device (10) according to one of the preceding claims, **characterized in that** the first detent portion (34) and the second detent portion (42) extend in each case over an angle (52) greater than 90°.

5. Locking device (10) according to one of the preceding claims, **characterized in that** the first detent portion (34) is formed integrally with the swivel lever (28).

6. Locking device (10) according to one of the preceding claims, **characterized in that** the swivel lever (28) has a resilient gripping portion (38), which in the first swivel position of the swivel lever (28) rests against the locking housing (22) and that the swivel lever (28) is transferable from the first swivel position to the second swivel position only by deformation of the gripping portion (38).

7. Locking device (10) according to claim 6, **characterized in that** the gripping portion (38) is formed integrally with the swivel lever (28).

8. Locking device (10) according to claim 6 or 7, **characterized in that** the gripping portion (38) and the first detent portion (34) verge one into the other.

9. Locking device (10) according to one of the preceding claims, **characterized in that** the swivel lever (28) has a bearing portion (44) for the swivel bearing arrangement on the locking housing.

10. Locking device (10) according to claim 9, **characterized in that** the bearing portion (44) is formed integrally with the swivel lever (28).

11. Locking device (10) according to one of the preceding claims, **characterized in that** the swivel lever (28) has a locking portion (54), which in the second swivel position of the swivel lever rests positively or in a frictionally locked manner against the depth stop rod (20).

12. Locking device (10) according to claim 11, **characterized in that** the locking portion (54) is formed integrally with the swivel lever (28).

13. Locking device (10) according to one of the preceding claims, **characterized in that** the swivel lever (28) is manufactured from a plastics material.

14. Additional handle for detachable fastening to a housing of a hand-held tool machine, comprising a locking device (10) according to one of the preceding claims.

15. Hand-held tool machine, comprising a locking device (10) according to one of claims 1 to 13 or an additional handle according to claim 14.

## Revendications

1. Dispositif d'arrêt (10) pour arrêter une barre de butée de profondeur (20), comprenant un boîtier d'arrêt (22), qui comporte un segment d'assemblage servant à l'assembler à une poignée (12) ou à un carter d'un outil guidé à la main, ou qui est constitué par une poignée (12) ou un carter d'un outil guidé à la main, dans lequel le boîtier d'arrêt (22) comporte une région de réception (24) pour recevoir la barre de butée de profondeur (20) mobile en translation longitudinale, la barre de butée de profondeur (20) pouvant être arrêtée ou étant arrêtée contre ou dans la région d'arrêt (24) au moyen d'un élément d'arrêt (26) pouvant être actionné à la main, l'élément d'arrêt (26) étant réalisé sous la forme d'un levier pivotant (28) qui, dans une première position de pivotement, provoque le déblocage, exempt de force d'actionnement manuelle, de la barre de butée de profondeur (20) et qui, dans une seconde position de pivotement, provoque le blocage de la barre de butée de profondeur (20), **caractérisé en ce que** le levier pivotant comporte un premier segment d'enclenchement (34), **en ce que** le boîtier d'arrêt (22) comporte un second segment d'enclenchement (42), et **en ce que** le premier segment d'enclenchement (34) peut être enclenché ou est enclenché de façon séparable avec le second segment d'enclenchement (42) du boîtier d'arrêt (22) dans la seconde position de pivotement du levier pivotant (28).

2. Dispositif d'arrêt (10) selon la revendication 1, **caractérisé en ce que** le levier pivotant (28) peut pivoter autour d'un axe de pivotement (30) et **en ce que** la région de réception (24) est placée entre le levier de pivotement (30) et le second segment d'enclenchement (42).

3. Dispositif d'arrêt (10) selon l'une des revendications précédentes, **caractérisé en ce que** le premier segment d'enclenchement (34) est réalisé sous la forme d'un évidement d'enclenchement et le second segment d'enclenchement (42) est réalisé sous la forme d'une saillie d'enclenchement.

4. Dispositif d'arrêt (10) selon l'une des revendications précédentes, **caractérisé en ce que** le premier segment d'enclenchement (34) et le second segment d'enclenchement (42) s'étendent chacun sur un angle (52) non supérieur à 90°.

5. Dispositif d'arrêt (10) selon l'une des revendications précédentes, **caractérisé en ce que** le premier segment d'enclenchement (34) est réalisé d'une seule pièce avec le levier pivotant (28).

6. Dispositif d'arrêt (10) selon l'une des revendications précédentes, **caractérisé en ce que** le levier pivotant (28) comporte un segment de prise élastique à la façon d'un ressort (38) qui, dans la première position de pivotement du levier pivotant (28), est en appui contre le boîtier d'arrêt (22), et **en ce que** le levier pivotant (28) ne peut être transféré de la première position de pivotement à la seconde position de pivotement que par déformation du segment de prise (38).

7. Dispositif d'arrêt (10) selon la revendication 6, **caractérisé en ce que** le segment de prise (38) est réalisé d'une seule pièce avec le levier pivotant (28).

8. Dispositif d'arrêt (10) selon la revendication 6 ou 7, **caractérisé en ce que** le segment de prise (38) et le premier segment d'enclenchement (34) se fondent l'un dans l'autre.

9. Dispositif d'arrêt (10) selon l'une des revendications précédentes, **caractérisé en ce que** le levier pivotant (28) comporte un segment de portée (44) pour le montage pivotant sur le boîtier d'arrêt.

10. Dispositif d'arrêt (10) selon la revendication 9, **caractérisé en ce que** le segment de portée (44) est réalisé d'une seule pièce avec le levier pivotant (28).

11. Dispositif d'arrêt (10) selon l'une des revendications précédentes, **caractérisé en ce que** le levier pivotant (28) comporte un segment d'arrêt (54) qui porte contre la barre de butée de profondeur (20) en formant une liaison mécanique ou par action de force dans la seconde position de pivotement du levier pivotant.

12. Dispositif d'arrêt (10) selon la revendication 11, **caractérisé en ce que** le segment d'arrêt (54) est réalisé d'une seule pièce avec le levier pivotant (28).

13. Dispositif d'arrêt (10) selon l'une des revendications précédentes, **caractérisé en ce que** le levier pivotant (28) est fabriqué en une matière plastique.

14. Poignée d'accessoire destinée à être fixée de façon démontable sur le carter d'un outil guidé à la main, comprenant un dispositif d'arrêt (10) selon l'une des revendications précédentes.

15. Outil guidé à la main, comprenant un dispositif d'arrêt (10) selon l'une des revendications 1 à 13 ou une poignée d'accessoire selon la revendication 14.
